# EUROPÄISCHE PATENTSCHRIFT

(11) **EP 2 174 029 B1**
(45) Veröffentlichungstag und Bekanntmachung des Hinweises auf die Patenterteilung: **12.12.2012**
(21) Anmeldenummer: 08801055.8
(22) Anmeldetag: 25.07.2008
(51) Int. Cl.: F16D 1/116

(54) **VERBINDUNGSANORDNUNG UND GELENKWELLE HIERMIT**
CONNECTING ARRANGEMENT AND ARTICULATED SHAFT COMPRISING THE SAME
SYSTÈME DE LIAISON ET ARBRE DE TRANSMISSION ASSOCIÉ

(30) Priorität: 26.07.2007 DE 102007035470
(43) Veröffentlichungstag der Anmeldung: 14.04.2010
(73) Patentinhaber: BF New Technologies GmbH, 63165 Mühlheim (DE)
(72) Erfinder: DISSER, Claus, 69500 Seligenstadt (DE)
(74) Vertreter: KEIL & SCHAAFHAUSEN Patentanwälte
(86) Internationale Anmeldenummer: PCT/DE2008/001207
(87) Internationale Veröffentlichungsnummer: WO 2009/012767

(56) Entgegenhaltungen:
- WO-A-2007/055685
- DE-A1-102006 034 985
- US-A- 4 813 810
- US-A- 5 499 884
- BLACK T: "QUICK GUIDE TO RETAINING RINGS" DESIGN ENGINEERING, MORGAN-GRAMPIAN LTD. LONDON, GB, Bd. 51, Nr. 2, 1. Februar 1980 (1980-02-01), Seiten 60-62, XP001600323 ISSN: 0308-8448

## Beschreibung

Die Erfindung betrifft eine Verbindungsanordnung zur drehfesten Verbindung von Komponenten im Antriebsstrang eines Fahrzeugs mit einem ersten Bauteil, das zumindest abschnittsweise eine im Wesentlichen zylindrische Außenfläche mit ersten Drehmomentübertragungsmitteln aufweist, und einem zweiten Bauteil, das zumindest abschnittsweise eine im Wesentlichen zylindrische Innenfläche mit zweiten Drehmomentübertragungsmitteln zur Aufnahme der zylindrischen Außenfläche des ersten Bauteils aufweist, wobei das erste und/oder das zweite Bauteil ein Bestandteil eines in axialer Richtung bewegbaren und/oder eine Abwinklung erlaubenden Gelenks sind, und mit einer einrastbaren Verbindungseinrichtung zum axialen Fixieren der beiden Bauteile aneinander. Weiter betrifft die Erfindung eine Gelenkwelle mit einer derartigen Verbindungsanordnung.

Derartige, in Gelenkwellen von Kraftfahrzeugen eingesetzte Verbindungsanordnungen sind häufig so ausgestaltet, dass das erste Bauteil eine Welle oder ein Wellenzapfen im Antriebsstrang eines Fahrzeugs ist, während das zweite Bauteil als eine mit einer zentralen Öffnung versehene Nabe eines Gelenks ausgebildet ist. Bei der Montage der Gelenkwelle wird die Verbindungseinrichtung eingerastet, um entweder Komponenten der Gelenkwelle untereinander zu verbinden oder die Gelenkwelle beispielsweise an einem getriebeseitigen oder differentialseitigen Wellenzapfen zu fixieren. Da die Kraftübertragung des Antriebsstrangs des Fahrzeugs unter anderem über diese Verbindungsanordnung erfolgt, ist es notwendig, sicherzustellen, dass sich die Verbindungseinrichtung der Verbindungsanordnung nicht aus ihrer eingerasteten Position löst.

Darüber hinaus ist es während der Montage wünschenswert, wenn von außen optisch feststellbar ist, ob die Verbindungseinrichtung ordnungsgemäß eingerastet ist. Andernfalls könnte sich die Verbindungsanordnung Im Betrieb lösen, so dass die Drehmomentübertragung zwischen den Bauteilen unterbrechen wäre.

Aus der WO 2007/065685 A1 ist ein Gelenk bekannt, dessen Innennabe mit einer Welle über eine Verzahnung drehfest verbunden ist. Zwischen der Welle und der Innennabe des Gelenks ist ein erster Sicherungsring vorgesehen, der eine Relativbewegung in axialer Richtung der Welle verhindern soll. Ein weiterer Sicherungsring auf der Welle verhindert als Anschlag eine weitere Relativbewegung zwischen der Welle und der Innennabe in einer Richtung, wenn die axiale Verbindung durch den ersten Sicherungsring versagt. Eine ähnliche Verbindung zwischen einer Welle und einem Gelenkteil mit einer ersten axialen Sicherung und einem zusätzlichen nur in einer Richtung wirkenden Anschlag ist aus der US 4,813,810 und der US 5,499,884 bekannt.

Aufgabe der vorliegenden Erfindung ist es daher, eine Verbindungsanordnung sowie eine Gelenkwelle der eingangs genannten Art bereitzustellen, bei welcher eine sichere axiale Fixierung der beiden Bauteile zueinander ermöglicht wird.

Diese Aufgabe wird erfindungsgemäß mit einer Verbindungsanordnung nach Anspruch 1 gelöst. Erfindungsgemäß weist die Verbindungsanordnung zusätzlich zu der einrastbaren Verbindungseinrichtung eine Sicherungseinrichtung zum Halten der Verbindungseinrichtung in ihrer eingerasteten Position auf. Diese zusätzliche Sicherungseinrichtung verhindert dabei einerseits, dass sich die einrastbare Verbindungseinrichtung ungewollt während des Betriebes aus ihrer eingerasteten Position lösen kann und erlaubt gleichzeitig eine Kontrolle, ob die einrastbare Verbindungseinrichtung ordnungsgemäß ihre eingerastete Position erreicht hat. Dies kann erfindungsgemäß dadurch erreicht werden, dass die zusätzliche Sicherungseinrichtung nur dann aktivierbar ist, wenn sich die Verbindungseinrichtung in ihrer eingerasteten Position befindet. Das Aktivieren der zusätzlichen Sicherungseinrichtung zeigt somit bereits während der Montage an, dass die meist von außen nicht sichtbare einrastbare Verbindungseinrichtung zum axialen Fixieren der beiden Bauteile zuverlässig eingerastet ist.

Nach einer bevorzugten Ausführungsform der Erfindung weist die Verbindungseinrichtung einen Sicherungsring auf, der zur Verbindung der beiden Bauteile in einander zugeordneten Nuten in der Außenfläche und der Innenfläche einbringbar ist. Ein derartiger Sicherungsring ermöglicht auf besonders einfache Weise das Herstellen einer zuverlässigen einrastbaren Verbindungseinrichtung,

Um eine besonders zuverlässige Verbindung der beiden Bauteile sowie eine definierte, zerstörungsfreie Demontierbarkeit zu ermöglichen, ist in Weiterbildung des Erfindungsgedankens die Verbindungseinrichtung mit einem Sicherungsring aus einem elastischen Material, insbesondere Federstahl, mit einem beispielsweise radial verlaufenden Schlitz versehen, wobei der Sicherungsring ein Profil mit einem im Wesentlichen rechteckigen Querschnitt hat und wenigstens eine Kante des Profils mit einer definierten Schräge zur Montage und/oder Demontage des Sicherungsrings versehen ist. Eine derartige Schräge an einer Kante des Profils des Sicherungsrings kann dabei bei einer axialen Bewegung der durch den Sicherungsring miteinander verbundenen Bauteile mit einer Kante oder dergleichen einer Nut in Kontakt kommen, so dass der Sicherungsring definiert radial nach innen oder nach außen gedrängt werden kann. Somit lässt sich die Gefahr, dass sich der Sicherungsring unkontrolliert in einer Position verschiebt, in welcher die Verbindung nicht mehr zerstörungsfrei lösbar ist, minimieren.

Dabei wird es bevorzugt, wenn die wenigstens eine definierte Schräge an einer der beiden radial äußeren Kanten des Sicherungsringes vorgesehen ist. Hierdurch ist zumindest eine definierte Montage oder Demontage des Sicherungsringes möglich. Es wird jedoch besonders bevorzugt, wenn an beiden radial äu-βeren Kanten des Sicherungsringes definierte Schrägen vorgesehen sind, so dass sowohl die Montage als auch die Demontage des Sicherungsrings mit definierten Kräften ermöglicht ist. Dabei kann die definierte Schräge einen Winkel von beispielsweise etwa 15° bis etwa 35° gegenüber einer radialen Seitenfläche des Sicherungsringes geneigt verlaufen.

Die erfindungsgemäße zusätzliche Sicherungseinrichtung weist nach einer Ausführungsform der Erfindung eine zusätzliche auf der Außenfläche des ersten Bauteils vorgesehene erste Sicherungsnut, eine auf der Außenfläche des zweiten Bauteils vorgesehene zweite Sicherungsnut sowie eine Klammer und/oder Hülse auf, die zwei Sicherungsvorsprünge aufweist, welche in die erste bzw. zweite Sicherungsnut einsetzbar sind. Die beiden Sicherungsvorsprünge und die beiden Sicherungsnuten sind dabei derart ausgebildet und angeordnet, dass die Sicherungsvorsprünge nur dann in die Sicherungsnuten eingreifen können, wenn sich die Verbindungseinrichtung in ihrer eingerasteten Position befindet. Die Aktivierung der zusätzlichen Sicherungseinrichtung durch Eingreifen der Sicherungsvorsprünge in die Sicherungsnuten ist folglich ein optisch kontrollierbares Anzeichen dafür, dass die Verbindungseinrichtung ordnungsgemäß eingerastet ist.

Nach einer bevorzugten Ausführungsform der Erfindung ist die Klammer und/oder Hülse im Wesentlichen U-förmig und auf die beiden Bauteile aufsteckbar ausgebildet. So kann die Klammer und/oder Hülse beispielsweise als ein auf das erste Bauteil aufsteckbarer Ring ausgebildet sein, der einen auf dem ersten Bauteil aufliegenden, beispielsweise zylindrischen ersten Abschnitt, einen daran anschließend sich radial von dem ersten Bauteil weg erstreckenden Verbindungsabschnitt und einen das zweite Bauteil übergreifenden, zu dem ersten Abschnitt parallelen zweiten Abschnitt aufweist. Die Sicherungsvorsprünge können dabei jeweils an den dem Verbindungsabschnitt gegenüberliegenden Ende des ersten bzw. zweiten Abschnitts vorgesehen sein. Mit anderen Worten kann das zweite Bauteil in einen Ringraum der Klammer oder Hülse zwischen den beiden Abschnitten eingesetzt werden, wobei der zweite Sicherungsvorsprung an dem zweiten Abschnitt in einer entsprechenden Nut auf der Außenseite des zweiten Bauteils einrasten kann. Dies erlaubt zusätzlich eine optische Kontrolle, ob die Sicherungseinrichtung und damit die einrastbare Verbindungseinrichtung ordnungsgemäß fixiert ist.

Alternativ ist es auch möglich, die Klammer und/oder Hülse der Sicherungseinrichtung derart auszubilden, dass diese nicht in axialer Richtung, sondern in radialer Richtung auf die beiden Bauteile aufsteckbar ist. Die Sicherungsvorsprünge können dann in nebeneinander angeordneten Sicherungsnuten des ersten bzw. zweiten Bauteils fixiert werden.

Eine besonders bevorzugte Ausführungsform der Erfindung sieht vor, dass die Klammer und/oder Hülse als eine Rasthülse ausgebildet ist, die in einer ersten Rastposition mit einem der Sicherungsvorsprünge lösbar in eine der beiden Sicherungsnuten einrastbar ist, und in einer zweiten Rastposition mit beiden Sicherungsvorsprüngen jeweils in eine der beiden Sicherungsnuten einrastbar ist. Die erste Rastposition ermöglicht dabei ein Befestigen der Sicherungseinrichtung an einem der beiden Bauteile für die Montage, wobei die eigentliche Verriegelung erst in der zweiten Rastposition stattfindet.

In Weiterbildung dieses Erfindungsgedankens wird es bevorzugt, wenn in der ersten Rastposition vor dem Einrasten der Verbindungseinrichtung eine axiale Relativbewegung zwischen dem ersten und dem zweiten Bauteil erfolgen kann.

Die zusätzliche Sicherungseinrichtung kann nach einer weiteren Ausführungsform der Erfindung ein elastisches Element aufweisen, welches einem der beiden Bauteile derart zugeordnet ist, dass das elastische Element dieses Bauteil in die eingerastete Position der Verbindungseinrichtung beaufschlagt. Das elastische Element kann dabei beispielsweise als eine Druckfeder oder ein Tellerfederpaket ausgebildet sein. Hierdurch ist es möglich, dass die zusätzliche Sicherungseinrichtung während des Betriebs stets eine Kraft auf die beiden miteinander zu verbindenden Bauteile derart ausübt, dass diese in ihrer eingerasteten Position der Verbindungseinrichtung gehalten werden. Dies kann zudem die Montage der Verbindungsanordnung erleichtern.

Die Aufgabe der vorliegenden Erfindung wird weiter durch eine Gelenkwelle für einen Antriebsstrang eines Fahrzeugs mit wenigstens einer Verbindungsanordnung der oben genannten Art gelöst, wobei das erste Bauteile eine Welle oder ein Wellenzapfen ist und das zweite Bauteil eine mit einer zentralen Öffnung versehene Nabe eines Gelenks, insbesondere eine Innennabe, ist.

In Weiterbildung dieses Erfindungsgedankens ist es vorgesehen, dass die Gelenkwelle zwei über ein als Gleichlauffestgelenk ausgebildetes Mittengelenk drehfest miteinander verbundene Wellenabschnitte aufweist, wobei jeweils an dem dem Mittengelenk abgewandten Ende jedes Wellenabschnitts ein Gleichlauffestgelenk angeordnet ist. Weiter ist die Gelenkwelle mit wenigstens einer, vorzugsweise nahe dem Mittengelenk angeordneten, Rollverschiebeeinheit versehen, die eine Profilhülse, auf deren Innenfläche zumindest bereichsweise Außenlaufbahnen vorgesehen sind, einen in der Profilhülse in axialer Richtung verschiebbaren Zapfen, auf dessen Außenfläche zumindest bereichsweise Innenlaufbahnen vorgesehen sind, und Kugeln aufweist, die zur Drehmomentübertragung jeweils in einander paarweise zugeordneten Außenlaufbahnen und Innenlaufbahnen angeordnet sind.

Wenn die Gelenkwelle eine Rollverschiebeeinheit aufweist, wird es bevorzugt, wenn zwischen dem Zapfen der Rollverschiebeeinheit und der Profilhülse eine Druckfederanordnung als zusätzliche Sicherungseinrichtung zum Halten der Verbindungseinrichtung der Verbindungsanordnung in ihrer eingerasteten Position vorgesehen ist. Damit muss die als Druckfeder ausgebildete zusätzliche Sicherungseinrichtung nicht unmittelbar an einem der beiden Bauteile der Verbindungsanordnung vorgesehen sein.

Die Erfindung wird nachfolgend anhand von Ausführungsbeispielen und unter Bezugnahme auf die Zeichnung näher erläutert.

Es zeigen schematisch:
- Fig. 1: einen Sicherungsring für eine Verbindungsanordnung nach einer ersten Ausführungsform der Erfindung,
- Fig. 2: eine Verbindungsanordnung nach einer ersten Ausführungsform der Erfindung,
- Fig. 3: vergrößert ein Detail der Verbindungsanordnung nach Fig. 2,
- Fig. 4: eine Seitenansicht der Sicherungseinrichtung der Verbindungsanordnung nach Fig. 2,
- Fig. 5: eine Verbindungsanordnung nach einer zweiten Ausführungsform der Erfindung und
- Fig. 6: eine Sicherungseinrichtung einer Verbindungsanordnung nach einer dritten Ausführungsform der Erfindung.

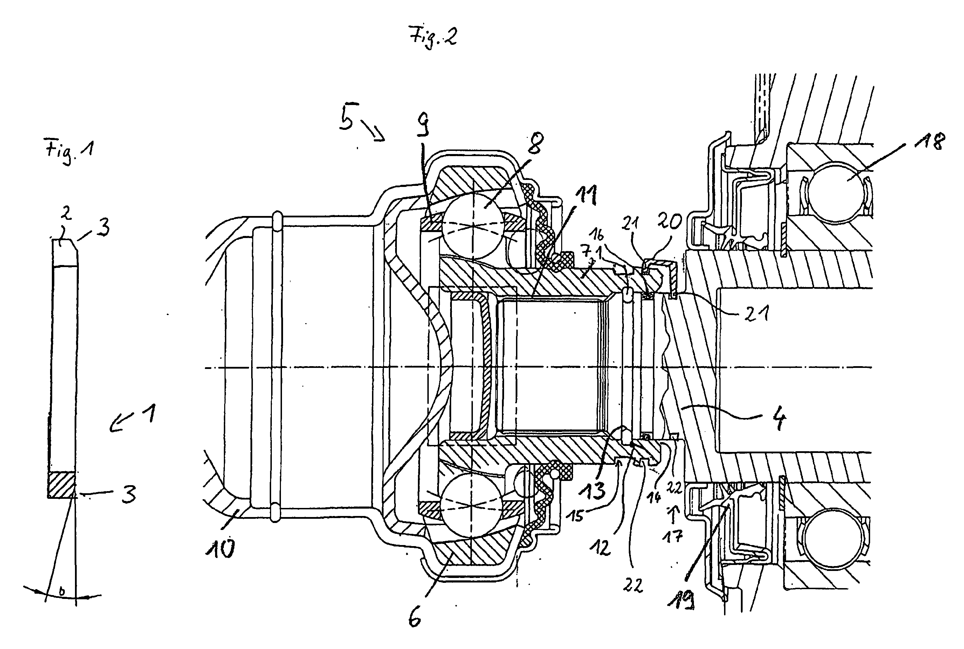

In Figur 2 ist eine erfindungsgemäße Verbindungsanordnung dargestellt, bei welcher ein getriebeseitiger Wellenzapfen 4 über einen Sicherungsring 1 mit einem Kugelgelenk 5 verbunden ist. Das Kugelgelenk weist hierbei eine Außennabe 6 mit mehreren als Gegenbahnen ausgebildeten Laufrillen sowie eine Innennabe 7 auf, die ebenfalls mit als Gegenbahnen ausgebildeten Laufrillen versehen ist. In den einander paarweise zugeordneten Laufrillenpaaren der Außennabe 6 und der Innennabe 7 sind jeweils Kugeln 8 aufgenommen, die in einem Käfig 9 geführt sind. Hierdurch kann ein Drehmoment von der Innennabe 7 auf die Außennabe 6 sowie eine mit dieser verbundene Hohlwelle 10 übertragen werden.

Zur Drehmomentübertragung zwischen der Innennabe 7 und dem Wellenzapfen 4 kann die Innennabe 7 innen und der Wellenzapfen 4 außen mit einer Keilverzahnung 11 versehen sei. Der Wellenzapfen 4 lässt sich somit drehfest in die Innennabe 7 einschieben und braucht lediglich über den Sicherungsring 1 axial fixiert zu werden.

Sowohl in der Innennabe 7 als auch auf dem Wellenzapfen 4 sind einander zugeordnete Nuten 12 bzw. 13 vorgesehen. In die Nut 13 auf dem Wellenzapfen 4 kann ein Sicherungsring 1 eingebracht werden, der im unbelasteten Zustand zumindest abschnittsweise aus der Nut 13 herausragt. Zur axialen Anbindung des Wellenzapfens 4 an die Innennabe 7 wird der Wellenzapfen 4 in die Innennabe 7 eingesteckt, wobei der Sicherungsring 1 durch eine Einführschräge 14 an der Stirnseite der Innennabe 7 in die Nut 13 gedrängt wird. Sobald die Nuten 12 und 13 in Ihrer in Figur 2 dargestellten einander zugeordneten Position angeordnet sind, schnappt der Sicherungsring 1 unter radialer Aufweitung in Folge seiner Vorspannung auch in die Nut 12 der Innennabe 7. Hierdurch ist die Verbindung zwischen der Innennabe 7 und dem Wellenzapfen 4 hergestellt.

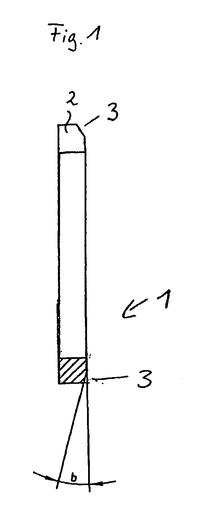

Der in den Figuren 1 bis 3 und 5 dargestellte Sicherungsring 1 weist in axialer Richtung gesehen eine im Wesentlichen runde Gestalt mit einem Schlitz 2 auf, der ein radiales Aufweiten oder Zusammendrücken des Sicherungsringes 1 gestattet. Wie aus Figur 1 ersichtlich ist, hat der Sicherungsring 1 im Querschnitt ein im Wesentlichen rechteckiges Profil. Bei der Ausführungsform nach Figur 1 ist an einer der radialen Außenkanten des Sicherungsringes 1 eine Schräge 3 vorgesehen, welche in einem Winkel von größer als 10°, beispielsweise etwa 15°, gegenüber der radial verlaufenden Seitenfläche des Sicherungsrings 1 geneigt ist. Zur Verbindung zweier Bauteile und zum Lösen dieser Verbindung muss der Sicherungsring 1 ausreichend elastisch sein und kann hierzu beispielsweise aus Federstahl bestehen.

Alternativ hierzu können bei weiteren Ausführungsformen eines Sicherungsrings beide radial äußeren Kanten des Sicherungsrings mit definierten Schrägen versehen sein oder es ist eine radial äußere Kante und eine radial innere Kante des Sicherungsrings mit einer Schräge versehen. Der Sicherungsring 1 hat die Gestalt einer ebenen Scheibe oder kann mit einem gewellten Profil versehen sein, so dass der Sicherungsring auch ein axiales Spiel ausgleichen kann.

Auf der Außenseite der Innennabe 7 kann eine Montagenut 15 vorgesehen sein, die den Eingriff eines Werkzeuges zum Zusammenschieben der Innennabe 7 und des Wellenzapfens 4 erlaubt. Weiter kann auf dem Wellenzapfen 4 eine weitere Nut zur Aufnahme eines Dichtungsringes 16 vorgesehen sein.

Zum Lösen der Verbindung zwischen dem Wellenzapfen 4 und der Innennabe 7 kann ein Werkzeug in den Demontagespalt 17 zwischen der Stirnseite der Innennabe und einem Absatz des Wellenzapfens 4 eingebracht werden, wodurch sich die Innennabe 7 von Wellenzapfen 4 abdrücken lässt. Hierbei kommt eine Kante der Nut 12 der Innennabe 7 mit der Schräge 3 des Sicherungsringes 1 in Anlage. Die Kante der Nut 12 gleitet dabei über die Schräge 3 des Sicherungsringes 1 und drängt diesen hierbei radial nach innen in die Nut 13, so dass die Innennabe 7 von der Welle abgezogen werden kann.

Die Montage und/oder Demontage der Verbindung zwischen dem Wellenzapfen 4 und der Innennabe 7 kann auch mittels eines maulförmigen Werkzeuges erfolgen, welches in die Montagenut 15 bzw. in den Demontagespalt 17 einsetzbar ist. Dieses in der Figur nicht dargestellte Werkzeug kann mit einer Stange versehen sein, auf der ein Gewicht verschiebbar gelagert ist. Weiter ist an der Stange wenigstens eine Prallfläche vorgesehen, gegen die das Gewicht geschlagen werden kann, so dass von der Stange ein Impuls auf das maulartige Werkzeug übertragen wird, das somit die Innennabe 7 auf den Wellenzapfen 4 schiebt bzw. von diesem abzieht.

Die in Figur 2 gezeigte Verbindungsanordnung ist nicht nur leichter und kompakter als herkömmliche Verbindungsanordnungen mit einer Wellenmutter, sondern ermöglicht es auch, den Wellenzapfen 4 klein zu halten. Hierdurch können. vorteilhafterweise Lager 18 und Wellendichtringe 19 mit vergleichsweise kleinem Durchmesser eingesetzt werden.

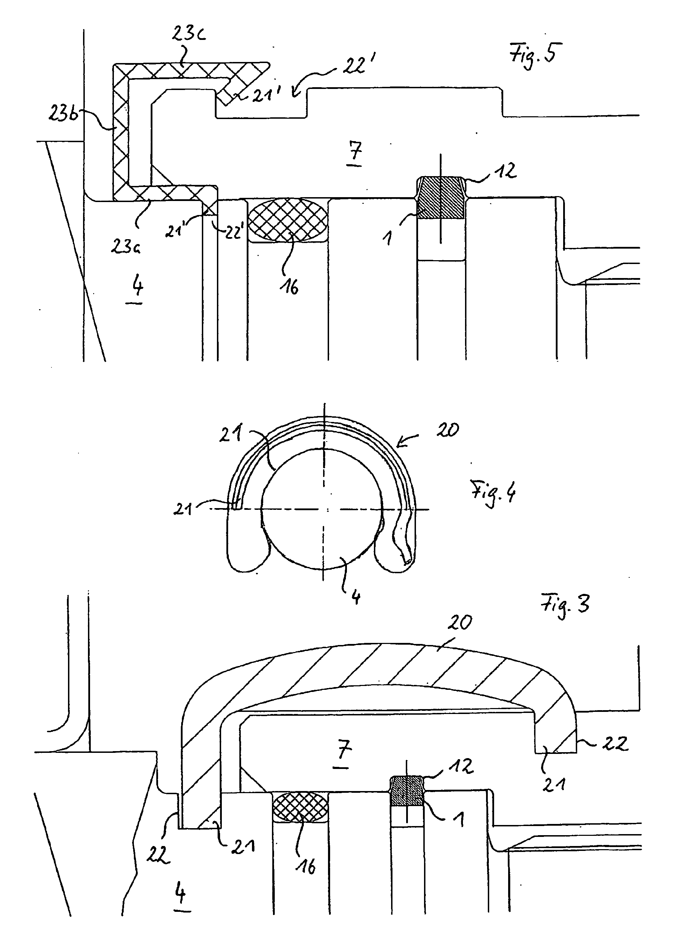

Die erfindungsgemäße Verbindungsanordnung weist eine zusätzliche Sicherungseinrichtung 20 auf, die im Wesentlichen durch eine in den Figuren 3 und 4 im Detail gezeigte Rasthülse gebildet ist, die den Wellenzapfen 4 und das Kugelgelenk 5 axial aneinander fixiert, wenn der Sicherungsring 1 in die Nut 12 eingerastet ist. Die Rasthülse 20 weist hierzu zwei stegartige Sicherungsvorsprünge 21 auf, die in entsprechende Sicherungsnuten 22 auf dem Wellenzapfen 4 und der Innennabe 7 ausgebildet sind.

Wie aus der Seitenansicht der Figur 4 ersichtlich ist, hat die Rasthülse 20 der zusätzlichen Sicherungseinrichtung eine im Wesentlichen U-förmige Gestalt. Hierdurch ist es möglich, die Rasthülse 20 in radialer Richtung auf die Verbindungsanordnung aufzustecken. Über Rastnasen im Bereich der Sicherungsvorsprünge 21 kann die Rasthülse 20 auf dem Wellenzapfen 4 bzw. der Innennabe 7 verrastet werden. Die Sicherungsvorsprünge 21 sind dabei in axialer Richtung so weit voneinander beabstandet, dass diese nur dann in die Sicherungsnuten 22 eingreifen können, wenn der Sicherungsring 1 in die Nut 12 eingerastet ist. Die Aktivierung der zusätzlichen Sicherungseinrichtung 20 durch Eingreifen der Sicherungsvorsprünge 21 in die Sicherungsnuten 22 ist damit ein optisch kontrollierbares Anzeichen dafür, dass der Sicherungsring 1 ordnungsgemäß eingerastet ist. Die Sicherungsvorsprünge 21 können auch derart ausgebildet sein, dass die Rasthülse 20 zwischen zwei Rastpositionen in radialer Richtung verschiebbar ist. So befindet sich in der ersten Rastposition lediglich einer der beiden Rastvorsprünge 21 in Eingriff mit einer entsprechenden Sicherungsnut 22, während der zweite Sicherungsvorsprung 21 noch nicht mit der entsprechenden Sicherungsnut 22 in Eingriff steht. Sofern in diesem Zustand der Sicherungsring 1 noch nicht in die Nut 12 eingerastet ist, ist folglich noch eine relative axiale Verschiebung der Innennabe 7 zu dem Wellenzapfen 4 möglich. Erst nach dem Einrasten des Sicherungsrings 1 kann dann die Rasthülse 20 in die zweite Rastposition verschoben werden, in welche beide Sicherungsvorsprünge 21 in die jeweiligen Sicherungsnuten 22 eingreifen.

Eine weitere Ausführungsform einer zusätzlichen Sicherungseinrichtung ist in Figur 5 dargestellt. Die zusätzliche Sicherungseinrichtung ist bei dieser Ausführungsform durch eine ringförmige Klammer bzw. Hülse 23 gebildet, die einen ersten, im Wesentlichen zylindrischen Abschnitt 23a, ein radial wegragender Verbindungsabschnitt 23b und einen wiederum mit diesem verbundenen zweiten, zylindrischen Abschnitt 23c aufweist. Die beiden Abschnitte 23a und 23c verlaufen dabei koaxial zueinander und zu den Wellenzapfen 4, auf welchem der erste Abschnitt 23a aufliegt. An dem dem Verbindungsabschnitt 23b abgewandten Ende des ersten Abschnitts 23a ist ein Sicherungsvorsprung 21' vorgesehen, der in eine entsprechende Sicherungsnut 22' des Wellenzapfens 4 eingreift. Dadurch ist die ringförmige Hülse 23 in axialer Richtung fest auf dem Wellenzapfen 4 gehalten. Zwischen dem ersten Abschnitt 23a und dem zweiten Abschnitt 23c ist ein ringförmiger Raum gebildet, in welchen ein Ende der Innennabe 7 hineinragt und damit die Hülse 23 auf dem Wellenzapfen 4 fixieren kann.

Auf der Außenfläche der Innennabe 7 ist eine weitere Sicherungsnut 22' ausgebildet, in welche ein hakenförmiger Sicherungsvorsprung 21' des zweiten Abschnitts 23c eingreifen kann. Die beiden Sicherungsvorsprünge 21' und Sicherungsnuten 22' sind dabei wiederum jeweils so angeordnet, dass die beiden Sicherungsvorsprünge 21' nur dann in die jeweiligen Sicherungsnuten 22' eingreifen können, wenn der Sicherungsring 1, wie in Figur 5 gezeigt, in die Nut 12 der Innennabe 7 eingerastet ist.

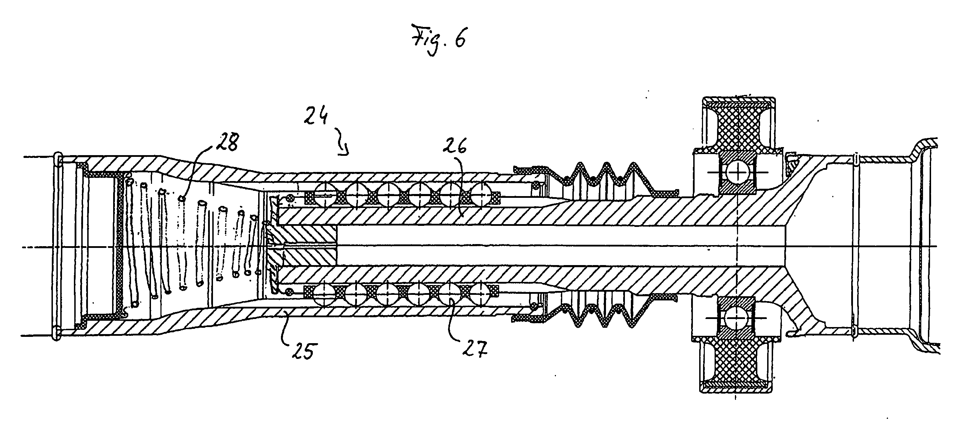

Eine weitere Ausführungsform einer zusätzlichen Sicherungseinrichtung ist in Figur 6 dargestellt, die einen Ausschnitt aus einer Gelenkwelle zeigt, in welcher eine Rollverschiebeeinheit 24 vorgesehen ist. Die Rollverschiebeeinheit 24 weist dabei im Wesentlichen eine Profilhülse 25, einen in dieser verschiebbar aufgenommenen Zapfen 26 und Kugeln 27 auf, die in einander paarweise zugeordneten Innenlaufbahnen und Außenlaufbahnen auf der Innenfläche der Profilhülse 25 bzw. der Außenfläche des Zapfens 26 ausgebildet sind. Die in einem hülsenförmigen Käfig geführten Kugeln 27 können in den Laufbahnpaaren abrollen, so dass die Profilhülse 25 relativ zu dem Zapfen 26 in axiater Richtung verschiebbar ist.

Zwischen der Profilhülse 25 und dem Zapfen 26 ist eine Druckfeder 28 angeordnet, die den Zapfen 26 in der Figur nach rechts, d.h. in die aus der Profilhülse 25 ausgefahrene Stellung beaufschlagt. Wenn die in Figur 6 dargestellte Rollverschiebeeinheit 24 mit der Druckfeder 28 in einer Gelenkwelle integriert ist, die eine Verbindungsanordnung nach den Figuren 2, 3 oder 5 aufweist, so bewirkt die Druckfeder 28, dass der Wellenzapfen 4 und die Innennabe 7 ineinander geschoben werden. Ein Loslösen des Sicherungsrings 1 aus der Nut 12 in der Innennabe 7 kann durch diese axiale Vorspannung verhindert werden. Die Rollverschiebeeinheit 24 mit der Druckfeder 28 wirkt somit als eine zusätzliche Sicherungseinrichtung, die die durch den Sicherungsring 1 gebildete Verbindungseinrichtung in ihrer eingerasteten Position hält.

## Patentansprüche

1. Verbindungsanordnung zur drehfesten Verbindung von Komponenten im Antriebsstrang eines Fahrzeugs mit einem ersten, insbesondere als eine Welle oder einen Wellenzapfen (4) im Antriebsstrang eines Fahrzeugs ausgebildeten, Bauteil, das zumindest abschnittsweise eine im Wesentlichen zylindrische Außenfläche mit ersten Drehmomentübertragungsmitteln (11) aufweist, und einem zweiten, insbesondere als eine mit einer zentralen Öffnung versehene Innennabe (7) eines Gelenks (5) ausgebildeten, Bauteil, das zumindest abschnittsweise eine im Wesentlichen zylindrische Innenfläche mit zweiten Drehmomentübertragungsmitteln zur Aufnahme der zylindrischen Außenfläche des ersten Bauteils aufweist, wobei das erste und/oder das zweite Bauteil (4, 7) ein Bestandteil eines in axialer Richtung bewegbaren und/oder eine Abwinklung erlaubenden Gelenks (5) sind, und mit einer einrastbaren Verbindungseinrichtung (1) zum axialen Fixieren der beiden Bauteile aneinander, wobei eine zusätzliche Sicherungseinrichtung zum Halten der Verbindungseinrichtung in ihrer eingerasteten Position vorgesehen ist, **dadurch gekennzeichnet, dass** die zusätzliche Sicherungseinrichtung (20, 23) eine zusätzliche auf der Außenfläche des ersten Bauteils vorgesehene erste Sicherungsnut (22, 22'), eine auf der Außenfläche des zweiten Bauteils vorgesehene zweite Sicherungsnut (22, 22') sowie eine Klammer und/oder Hülse (20, 23) aufweist, die zwei Sicherungsvorsprünge (21, 21') aufweist, welche in die erste bzw. zweite Sicherungsnut (22, 22') einsetzbar sind.

2. Verbindungsanordnung nach Anspruch 1, **dadurch gekennzeichnet, dass** die Verbindungseinrichtung einen Sicherungsring (1) aufweist, der zur Verbindung der beiden Bauteile in einander zugeordneten Nuten in der Außenfläche und der Innenfläche einbringbar ist.

3. Verbindungsanordnung nach Anspruch 1 oder 2, **dadurch gekennzeichnet, dass** die Verbindungseinrichtung einen Sicherungsring (1) aus einem elastischen Material mit einem beispielsweise radial verlaufenden Schlitz aufweist, wobei der Sicherungsring ein Profil mit einem im Wesentlichen rechteckigen Querschnitt hat und wenigstens eine Kante des Profils mit einer definierten Schräge zur Montage und/oder Demontage des Sicherungsrings versehen ist.

4. Verbindungsanordnung nach einem der vorhergehenden Ansprüche, **dadurch gekennzeichnet, dass** die Klammer und/oder Hülse (20) im Wesentlichen U-förmig und auf die beiden Bauteile (4, 7) aufsteckbar ausgebildet ist.

5. Verbindungsanordnung nach einem der vorhergehenden Ansprüche, **dadurch gekennzeichnet, dass** die Klammer und/oder Hülse (20, 23) als eine Rasthülse ausgebildet ist, die in einer ersten Rastposition mit einem der Sicherungsvorsprünge (21, 21') lösbar in eine der beiden Sicherungsnuten (22, 22') einrastbar ist, und in einer zweiten, insbesondere weiter auf die beiden Bauteile aufgesteckten, Rastposition mit beiden Sicherungsvorsprüngen jeweils in eine der beiden Sicherungsnuten einrastbar ist.

6. Verbindungsanordnung nach Anspruch 5, **dadurch gekennzeichnet, dass** in der ersten Rastposition vor dem Einrasten der Verbindungseinrichtung (1) eine axiale Relativbewegung zwischen dem ersten und dem zweiten Bauteil (4, 7) erfolgen kann.

7. Verbindungsanordnung nach einem der vorhergehenden Ansprüche, dadurch gekenntzeichnet, dass die zusätzliche Sicherungseinrichtung ein elastisches Element (28) aufweist, welches einem der beiden Bauteile (4, 7) derart zugeordnet ist, dass das elastische Element dieses Bauteil in die eingerastete Position der Verbindungseinrichtung beaufschlagt.

8. Verbindungsanordnung nach Anspruch 7, **dadurch gekennzeichnet, dass** das elastische Element eine Druckfeder (28) ist.

9. Gelenkwelle für einen Antriebsstrang eines Fahrzeugs mit wenigstens einer Verbindungsanordnung nach einem der vorhergehenden Ansprüche, wobei das erste Bauteil eine Welle (10) oder einen Wellenzapfen (4) ist und das zweite Bauteil eine mit einer zentralen Öffnung versehene Nabe (7) eines Gelenks (5) ist.

10. Gelenkwelle nach Anspruch 9 mit zwei über ein als Gleichlauffestgelenk ausgebildetes Mittengelenk drehfest miteinander verbundenen Wellenabschnitten, wobei jeweils an dem dem Mittengelenk abgewandten Ende jedes Wellenabschnitts ein Gleichlauffestgelenk angeordnet ist, und mit wenigstens einer, insbesondere nahe dem Mittengelenk angeordneten, Rollverschiebeeinheit (24), die eine Profilhülse (25), auf deren Innenfläche zumindest bereichsweise Außenlaufbahnen vorgesehen sind, einen in der Profilhülse in axialer Richtung verschiebbaren Zapfen (26), auf dessen Außenfläche zumindest bereichsweise Innenlaufbahnen vorgesehen sind, und Kugeln (27) aufweist, die zur Drehmomentübertragung jeweils in einander paarweise zugeordneten Außenlaufbahnen und Innenlaufbahnen angeordnet sind.

11. Gelenkwelle nach Anspruch 10, **dadurch gekennzeichnet, dass** zwischen dem Zapfen (26) der Rollverschiebeeinheit (24) und der Profilhülse (25) eine Druckfederanordnung (28) als zusätzliche Sicherungseinrichtung zum Halten der Verbindungseinrichtung der Verbindungsanordnung in ihrer eingerasteten Position vorgesehen ist.

## Claims

1. A connection arrangement for the rotationally fixed connection of components in the drive train of a vehicle, having a first part, which is in particular formed as a shaft or a shaft journal (4) in the drive train of a vehicle and has at least in sections a substantially cylindrical outer surface with first torque transmission means (11), and a second part, which is in particular formed as an inner hub (7) of a knuckle (5), which is provided with a central opening and has at least in sections a substantially cylindrical inner surface with second torque transmission means for receiving the cylindrical outer surface of the first part, wherein the first and/or second parts (4, 7) are a constituent part of a knuckle (5) which can be moved in an axial direction and/or allows an angle, and having a latchable connection device (1) for axially fixing the two parts to each other, wherein an additional securing means is provided for holding the connection device in its latched position, **characterised in that** the additional securing device (20, 23) has an additional first securing groove (22, 22'), which is provided on the outer surface of the first part, a second securing groove (22, 22'), which is provided on the outer surface of the second part, and a clamp and/or bushing (20, 23), which has two securing projections (21, 21'), which can be inserted into the first or second securing groove (22, 22').

2. The connection arrangement according to Claim 1, **characterised in that** the connection device has a securing ring (1), which can be introduced into grooves in the outer surface and the inner surface which are associated with each other in order to connect the two parts.

3. The connection arrangement according to Claim 1 or 2, **characterised in that** the connection device has a securing ring (1) consisting of an elastic material having a slot which runs for example radially, wherein the securing ring has a profile with a substantially rectangular cross section, and at least one edge of the profile is provided with a defined chamfer for mounting and/or demounting the securing ring.

4. The connection arrangement according to one of the preceding claims, **characterised in that** the clamp and/or bushing (20) is substantially U-shaped and can be plugged onto the two parts (4, 7).

5. The connection arrangement according to one of the preceding claims, **characterised in that** the clamp and/or bushing (20, 23) is formed as a latching bushing, which can be latched detachably into one of the two securing grooves (22, 22') with one of the securing projections (21, 21') in a first latching position, and can be latched into one of the two securing grooves with both securing projections in a second latching position, in particular placed further onto the two parts.

6. The connection arrangement according to Claim 5, **characterised in that**, in the first latching position before the connection device (1) latches in, an axial relative movement can take place between the first and second parts (4, 7).

7. The connection arrangement according to one of the preceding claims, **characterised in that** the additional securing device has an elastic element (28), which is associated with one of the two parts (4, 7) in such a manner that the elastic element loads the said part when the connection device is in the latched-in position.

8. The connection arrangement according to Claim 7, **characterised in that** the elastic element is a compression spring (28).

9. A propeller shaft for a drive train of a vehicle, having at least one connection arrangement according to one of the preceding claims, wherein the first part is a shaft (10) or a shaft journal (4) and the second part is a hub (7) of a knuckle (5) which is provided with a central opening.

10. The propeller shaft according to Claim 9, having two shaft sections, which are connected in a rotationally fixed manner to each other by means of a central knuckle which is formed as a homokinetic fixed joint, wherein one homokinetic fixed joint is arranged at the end of each shaft section which faces away from the central knuckle, and having at least one rolling displacement unit (24), which is arranged in particular in the vicinity of the central knuckle and has a profiled bushing (25), on the inner surface of which outer races are provided at least in regions, a pin (26) which can be displaced in the axial direction in the profiled bushing and on the outer surface of which inner races are provided at least in regions, and balls (27) which are arranged in outer races and inner races, which are associated with each other in pairs, for the purpose of torque transmission.

11. The propeller shaft according to Claim 10, **characterised in that** a compression spring arrangement (28) is provided between the pin (26) of the rolling displacement unit (24) and the profiled bushing (25) as an additional securing means for holding the
connection device of the connection arrangement in its latched-in position.

## Revendications

1. Système de liaison pour liaison résistant à la torsion de composants dans une chaîne cinétique de propulsion d'un véhicule avec un premier composant, en particulier constitué comme un arbre ou un tourillon (4) dans une chaîne cinétique de propulsion d'un véhicule, qui présente au moins par section une surface extérieure pour l'essentiel cylindrique avec des premiers moyens de transmission du couple (11) et un deuxième composant constitué en particulier comme un moyeu intérieur (7) d'une transmission (5), muni d'une ouverture centrale, qui présente au moins par sections, une surface intérieure pour l'essentiel cylindrique avec des deuxièmes moyens de transmission du couple pour recevoir la surface extérieure cylindrique du premier composant, pour lequel le premier et/ou le deuxième composant (4,7) constituent un élément d'une transmission (5) mobile dans le sens axial et/ou permettant un pliage et avec un dispositif de liaison (1) enclenchable pour la fixation axiale des deux composants entre eux, pour lequel un dispositif de blocage supplémentaire est prévu pour maintenir le dispositif de liaison dans sa position encliquetée **caractérisé en ce que** le dispositif de blocage (20,23) supplémentaire présente une première rainure de blocage (22, 22') supplémentaire prévue sur la surface extérieure du premier composant, une deuxième rainure de blocage (22, 22') prévue sur la surface extérieure du deuxième composant, ainsi qu'une agrafe et/ou un manchon (20, 23) qui présentent deux parties en saillie de blocage (21, 21') qui sont insérables dans la première ou la deuxième rainure de blocage (22, 22').

2. Système de liaison selon la revendication 1 **caractérisé en ce que** le dispositif de liaison présente une bague d'arrêt (1) qui peut être introduite dans les rainures attribuées réciproquement dans la surface extérieure et dans la surface intérieure pour réunir les deux composants.

3. Système de liaison selon la revendication 1 ou 2 **caractérisé en ce que** le dispositif de liaison présente une bague d'arrêt (1) faite d'un matériau élastique avec une fente passant par exemple dans le sens radial, pour lequel la bague d'arrêt possède un profil avec une section pour l'essentiel rectangulaire et pour lequel au moins une arête du profil est munie d'un chanfrein défini pour le montage et/ou le démontage de la bague d'arrêt.

4. Système de liaison selon une des revendications précédentes **caractérisé en ce que** l'agrafe et/ou le manchon (20) est pour l'essentiel constitué en forme de U et peut être emboîté sur les deux composants (4, 7).

5. Système de liaison selon une des revendications précédentes **caractérisé en ce que** la griffe et/ou le manchon (20, 23) est constitué comme un manchon à cran qui peut être enclenché dans une première position d'encliquetage avec un des parties en saillie de blocage (21, 21'), amovible dans une des deux rainures de blocage (22, 22') et peut être enclenché dans une deuxième position d'encliquetage, emboîté en particulier en plus sur les deux composants, avec les deux parties en saillie de blocage à chaque fois dans une des deux rainures de blocage.

6. Système de liaison selon la revendication 5 **caractérisé en ce que** dans la première position d'encliquetage, un mouvement relatif axial peut avoir lieu avant l'encliquetage du dispositif de liaison (1) entre le premier et le deuxième composant (4, 7).

7. Système de liaison selon une des revendications précédentes **caractérisé en ce que** le dispositif de blocage supplémentaire présente un élément élastique (28) qui est attribué à un des deux composants (4, 7) de telle manière que l'élément élastique sollicite ce composant dans la position enclenchée du dispositif de liaison.

8. Système de liaison selon la revendication 7 **caractérisé en ce que** l'élément élastique est un ressort de pression (28).

9. Arbre de transmission pour une chaîne cinématique de propulsion d'un véhicule avec au moins un système de liaison selon une des revendications précédentes pour lequel le premier composant est un arbre (10) ou un tourillon (4) et le deuxième composant est moyeu (7) d'une transmission (5), muni d'une ouverture centrale.

10. Arbre de transmission selon la revendication 9 avec deux sections d'arbre réunies entre elles de façon résistante à la torsion par un joint central constitué comme un joint homocinétique fixe, pour lequel, à chaque fois, un joint homocinétique fixe est monté sur l'extrémité opposée au joint central de chaque section d'arbre et avec au moins une unité mobile roulante (24) disposée en particulier près du joint central, qui comporte un manchon profilé (25) sur la surface intérieure duquel, sont prévues, au moins par secteur, des pistes de roulement extérieures, un tourillon (26) déplaçable dans le manchon profilé dans le sens axial, sur la surface extérieure duquel, sont prévues, au moins par secteur, des pistes de roulement intérieures, et, des billes (27) qui sont disposées à chaque fois pour la transmission du couple respectivement dans les voies de roulement extérieures et voies de roulement intérieures attribuées réciproquement par paire.

11. Arbre de transmission selon la revendication 10 **caractérisé en ce qu'**un système à ressort de pression (28) est prévu entre le tourillon (26) de l'unité mobile roulante (24) et le manchon profilé (25) en tant que dispositif de blocage supplémentaire pour maintenir le dispositif de liaison du système de liaison dans sa position encliquetée.
